# DEMANDE DE BREVET EUROPEEN

(11) **EP 4 052 776 A1**
(43) Date de publication de la demande: **07.09.2022**
(21) Numéro de dépôt: 22154008.1
(22) Date de dépôt: 28.01.2022
(51) Int. Cl.: B01D 53/04, B01J 8/02, B01D 53/047

(54) **ADSORBEUR RADIAL À CIRCULATION RADIALE D'UN GAZ**

(30) Priorité: 05.03.2021 FR 2102138
(71) Demandeur: L'Air Liquide, société anonyme pour l'Étude et l'Exploitation des procédés Georges Claude, 75007 Paris (FR)
(72) Inventeur: SUN, Lian-Ming, Hangzhou, 310012 (CN); SOBRE, Christophe, 94503 Champigny-sur-Marne (FR); MONEREAU, Christian, 94503 Champigny-sur-Marne (FR); GUERET, Vincent, 94503 Champigny-sur-Marne (FR)
(74) Mandataire: Air Liquide

(57) **Abrégé**

L'invention concerne un adsorbeur radial (100) comprenant :
- une masse adsorbante (20) comportant des particules,
- une virole (10) cylindrique s'étendant selon un axe longitudinal vertical lorsque l'adsorbeur (100) est en fonctionnement,
- une grille externe (11) et une grille interne (12) agencées de sorte à être perméables au gaz et imperméables aux particules, les grilles interne (12) et externe (11) formant entre elles un volume annulaire logeant la masse adsorbante (20),
- une chambre interne (15) disposée entre l'axe longitudinal vertical et la grille interne (12),
- une chambre externe (14) disposée entre la grille externe (11) et la virole (10), les chambres interne (15) et externe (14) étant destinées à la circulation du gaz,
- la grille externe (11) étant formée par une pluralité de fils et une pluralité de supports, les supports étant montés transversalement aux fils, les supports et les fils étant montés solidaires entre eux, les fils formant une pluralité d'ouvertures longitudinales pour le passage du gaz,
- la grille externe (11) étant agencée de sorte que les supports s'étendent selon l'axe longitudinal vertical et de sorte que les supports soient disposés du côté de la chambre externe (14) et les fils du côté de la masse adsorbante (20).

## Description

La présente invention concerne un adsorbeur radial à circulation radiale d'un gaz et une unité de purification ou de séparation de gaz comportant au moins un tel adsorbeur. L'invention trouve une application particulièrement avantageuse, mais non exclusive, avec des PSA (pour « Pressure Swing Adsorption ») ou des LTSA (pour « Low Temperature Swing Adsorption »).

De manière générale, un procédé par adsorption en phase gazeuse permet de séparer une, ou plusieurs molécules d'un mélange gazeux les contenant, en exploitant la différence d'affinité d'un ou plusieurs adsorbants pour les différentes molécules constitutives du mélange. L'affinité d'un adsorbant pour une molécule dépend d'une part de la structure et la composition de l'adsorbant et d'autre part des propriétés de la molécule, en particulier sa taille, sa structure électronique et ses moments multipolaires.

Un adsorbant peut être par exemple une zéolite, un charbon actif, une alumine activée éventuellement dopée, un gel de silice, un tamis moléculaire carboné, une structure métallo-organique, un oxyde ou hydroxyde de métaux alcalins ou alcalino-terreux, une structure poreuse contenant de préférence une substance capable de réagir réversiblement avec les molécules à arrêter (une telle substance étant par exemple une amine, un solvant physique, un complexant métallique, un oxyde métallique, un hydroxyde métallique).

Les matériaux adsorbants les plus classiques sont sous forme de particules (billes, bâtonnets, concassés...) mais existent également sous forme structurée tels les monolithes, roues, contacteurs à passages parallèle, tissus, fibre.

Bien qu'un adsorbeur radial soit essentiellement utilisé dans le cas d'adsorbant sous forme de particules de faible dimension (par exemple de 0,5 à 5 mm), il est envisageable de l'utiliser également pour maintenir des monolithes de quelques centimètres, par exemple des disques multi perforés de 2,5 cm de diamètre et 1 cm d'épaisseur ou des languettes de longueur centimétrique et d'épaisseur millimétrique, planes ou courbées, du tissu , des fibres de longueur allant de quelques centimètres à plusieurs mètres. Le matériau adsorbant peut être constitué de plusieurs lits successifs d'adsorbants différents ou être un mélange homogène de plusieurs types d'adsorbant. Le terme « masse adsorbante » désigne le matériau ou le mélange de matériaux mis en œuvre dans l'adsorbeur.

L'adsorption est largement utilisée pour purifier ou séparer les gaz et les procédés mis en œuvre dans ce domaine se comptent désormais par dizaines. La masse adsorbante est très majoritairement maintenue immobile dans un réacteur auquel on donne le nom plus spécifique d'adsorbeur.

On peut distinguer trois grandes familles de procédés par adsorption : les procédés à charge perdue, les procédés à modulation de température appelés TSA (Température Swing Adsorption) et enfin les procédés PSA.

Dans les procédés à charge perdue, on met en place une nouvelle charge lorsque celle en cours d'utilisation est saturée par les impuretés ou plus généralement quand elle ne peut plus jouer son rôle de protection de manière suffisante.

Dans les procédés de type TSA, l'adsorbant en fin d'utilisation est régénéré in situ, c'est-à-dire que les impuretés arrêtées sont évacuées afin que l'adsorbant récupère l'essentiel de ses capacités d'adsorption et puisse recommencer un cycle d'épuration, l'effet de régénération essentiel étant dû à une élévation de température. Dans le cas des procédés de type TSA, le niveau de température à utiliser dépend essentiellement de l'affinité de l'adsorbant pour l'impureté à arrêter. Dans le cas où cette affinité est importante (système zéolite / eau par exemple), on peut être amené à utiliser des niveaux de température dépassant 200 °C. Inversement, dans le cas d'affinité faible (alumine activée / CO2 par exemple) des températures inférieures à 100 °C peuvent être suffisantes pour désorber les impuretés. On peut utiliser alors le terme de LTSA pour désigner les procédés TSA pour lesquels la température habituelle de régénération n'est pas supérieure de plus de 100 °C et préférentiellement de plus de 70 °C à la température d'adsorption, par exemple si on se limite à une température de régénération de 100 °C avec une alimentation à 30 °C. Ces procédés LTSA se développent afin d'utiliser une énergie bon marché (vapeur basse pression, récupération de chaleur sur des fluides à refroidir).

Dans les procédés de type PSA, l'adsorbant en fin de phase de production est régénéré par la désorption des impuretés obtenue au moyen d'une baisse de leur pression partielle. Cette baisse de pression peut être obtenue par une baisse de la pression totale et/ ou par balayage avec un gaz exempt ou contenant peu d'impuretés.

Les procédés par adsorption modulée en pression sont utilisés aussi bien pour éliminer des traces d'impuretés, par exemple de teneur inférieure à un pourcent dans le gaz d'alimentation, que pour séparer des mélanges contenant des dizaines de pourcents de différents gaz. Dans le premier cas, on parle généralement d'épuration (par exemple un séchage de gaz) et dans le second cas, on parle généralement de séparation (par exemple une production d'oxygène ou d'azote à partir d'air atmosphérique).

On désigne par le terme PSA, tout procédé d'épuration ou de séparation de gaz mettant en œuvre une variation cyclique de la pression que voit l'adsorbant entre une pression haute, dite pression d'adsorption, et une pression basse, dite pression de régénération. Ainsi, cette appellation générique de PSA est employée indifféremment pour désigner les procédés cycliques suivants, pour lesquels il est aussi courant de donner des noms plus spécifiques en fonction des niveaux de pression mis en jeu ou du temps nécessaire à un adsorbeur pour revenir à son point initial (temps de cycle) :
- les procédés VSA dans lesquels l'adsorption s'effectue sensiblement à la pression atmosphérique, préférentiellement entre 0,95 et 1,25 bar abs et la pression de désorption est inférieure à la pression atmosphérique, typiquement de 50 à 400 mbar abs ;
- les procédés MPSA ou VPSA dans lesquels l'adsorption s'effectue à une pression haute supérieure à la pression atmosphérique, typiquement entre 1,5 et 6 bar abs, et la désorption à une pression basse inférieure à la pression atmosphérique, généralement comprise entre 200 et 600 mbar abs ;
- les procédés PSA proprement dits dans lesquels la pression haute est sensiblement supérieure à la pression atmosphérique, typiquement entre 3 et 50 bar abs et la pression basse sensiblement égale ou supérieure à la pression atmosphérique, généralement entre 1 et 9 bar abs ;
- les procédés RPSA (Rapid PSA) pour lesquels la durée du cycle de pression est typiquement inférieure à la minute ;
- les procédés URPSA (Ultra Rapid PSA) pour lesquels la durée du cycle de pression est de l'ordre de quelques secondes maximum.

Il convient de noter que ces diverses appellations (LTSA, VSA, VPSA, MPSA, RPSA, URPSA) ne sont pas standardisées et que les limites sont sujettes à variation. On rappelle que sauf avis contraire, l'utilisation du terme PSA recouvre ici toutes les variantes de PSA, et que par LTSA on entend tout type de TSA dans lequel on utilise une température de régénération nominale (c'est-à-dire hors régénération exceptionnelle éventuelle, comme lors de la première mise en service ou après un incident...) qui n'est pas supérieure de plus de 100 °C et préférentiellement de plus de 70 °C à la température d'alimentation.

L'adsorbeur le plus simple est de forme cylindrique à axe vertical. Lorsque les débits à épurer deviennent importants, on peut utiliser des grappes d'adsorbeurs de ce type fonctionnant en parallèle et se comportant comme un adsorbeur unique. On utilise également des adsorbeurs cylindriques à axe horizontal.

Avec des débits plus élevés et/ou si on recherche de faibles pertes de charge et/ou si la vitesse du gaz peut être supérieure à la vitesse d'attrition, c'est-à-dire de mise en mouvement des particules, il devient intéressant d'utiliser un adsorbeur radial.

Ce type d'adsorbeur dispose en effet de deux paramètres de liberté, à savoir le diamètre et la hauteur des grilles, pour définir les sections de passage du gaz à travers la masse adsorbante.

De manière connue, un adsorbeur radial comprend une virole cylindrique verticale d'axe central, des fonds inférieur et supérieur. Ces fonds comportent une tubulure inférieure et une tubulure supérieure centrées sur l'axe de la virole. La tubulure inférieure permet d'alimenter l'adsorbeur en gaz à traiter et de récupérer un résiduaire. La tubulure supérieure permet d'extraire le gaz épuré et d'introduire par exemple un gaz de régénération.

Le gaz à traiter circule de la périphérie vers le centre. On dit alors que l'adsorption est de type centripète.

La masse adsorbante est maintenue en place entre une grille cylindrique perforée externe et une grille cylindrique perforée interne. Ces grilles sont fixées à leurs extrémités inférieures à un fond interne plein bombé qui maintient leur écartement et bloque les particules de la masse adsorbante. Les deux grilles sont fixées à leur autre extrémité au fond supérieur.

En pratique, ces grilles sont donc suspendues dans l'adsorbeur et libres de bouger axialement, mais de façon conjointes car rendues solidaires par le fond interne. La partie supérieure des grilles est constituée par deux viroles cylindriques pleines (non perforée). Le surplus d'adsorbant logé dans cette zone supérieure sert à la fois de réserve pour compenser un éventuel tassement de la masse adsorbante au cours du temps.

La distribution homogène des gaz à travers la masse adsorbante se fait grâce à un dimensionnement adéquat des volumes laissés libres aux gaz et en particulier grâce à une chambre externe disposée entre grille externe et virole et une chambre interne au centre de l'adsorbeur. Les volumes libres de l'adsorbeur occupés par les gaz sont généralement appelés « volumes morts » de l'adsorbeur par opposition au volume occupé par l'adsorbant. En fin d'étape d'adsorption, le gaz d'alimentation et le gaz produit occupant ces volumes sont au moins en partie « perdus » car ils partent avec le résiduaire. Cet effet est à prendre en compte dans la détermination des performances de l'unité mettant en œuvre de tels adsorbeurs, en particulier pour les cycles les plus rapides (PSA).

Très généralement, les grilles sont fabriquées à partir de tôles perforées en acier carbone ou en inox de 4 à 12 mm d'épaisseur. Pour être réalisable industriellement, la dimension des trous ou, plus généralement, des ouvertures, doit être de plusieurs millimètres, voire de quelques centimètres pour les tôles les plus épaisses, c'est-à-dire que de telles grilles sont incapables de retenir des particules d'adsorbant de dimension moyenne généralement comprise entre 5 et 0,5 mm.

De telles grilles sont donc recouvertes d'une toile métallique ou de métal déployé dont les ouvertures de passage peuvent être de dimensions très faibles (quelques centaines de microns par exemple) tout en ayant un taux de vide élevé.

D'autres solutions pour la réalisation de ces grilles ont été décrites telles qu'un maillage serré de gros fils métalliques, de la toile maintenue par une série d'anneaux circulaires ou par une spire ou fixée à l'extrémité d'écarteurs solidaires de l'enveloppe.

Il a été proposé par ailleurs des systèmes plus complexes comme une ossature cylindrique en nid d'abeille constituée d'un empilage d'anneaux de tôle ondulée à ondes trapézoïdales ou une grille avec ossature enroulée en hélice à la manière d'un tuyau flexible ou d'un ressort, les spires étant éventuellement reliées les unes aux autres par un agrafage souple adéquat (grille de type nasse).

Avec le développement continu des procédés d'adsorption pour la séparation ou l'épuration des gaz, on a pu observer d'une part une augmentation conséquente de la taille de ces adsorbeurs et d'autre part une plus grande variété des conditions de fonctionnement. Dans ces conditions, les grilles décrites ci-dessus ne permettent pas toujours d'obtenir la meilleure efficacité possible et leur technique de fabrication n'est plus adaptée.

La présente invention vise à remédier efficacement à ces inconvénients en proposant un adsorbeur radial, à circulation radiale d'un gaz, l'adsorbeur comprenant :
- une masse adsorbante comportant des particules,
- une virole cylindrique s'étendant selon un axe A-A longitudinal vertical lorsque l'adsorbeur est en fonctionnement, la virole comportant un fond inférieur, un fond supérieur et des tubulures d'entrée/sortie pour le gaz,
- une grille externe agencée de sorte à être perméable au gaz et imperméable aux particules, la grille externe s'étendant selon l'axe longitudinal vertical,
- une grille interne agencée de sorte à être perméable au gaz et imperméable aux particules, la grille interne s'étendant selon l'axe longitudinal vertical,
- des moyens d'étanchéité en partie inférieure et en partie supérieure des grilles interne et externe, les grilles interne et externe formant entre elles un volume annulaire logeant la masse adsorbante,
- une chambre interne disposée entre l'axe longitudinal vertical et la grille interne,
- une chambre externe disposée entre la grille externe et la virole, les chambres interne et externe étant destinées à la circulation du gaz,
- la grille externe étant formée par une pluralité de fils et une pluralité de supports, les supports étant montés transversalement aux fils, les supports et les fils étant montés solidaires entre eux, les fils formant une pluralité d'ouvertures longitudinales pour le passage du gaz de sorte que deux fils adjacents définissent une des ouvertures longitudinales de la pluralité, chaque ouverture longitudinale ayant une largeur d'ouverture minimale Lo pour le passage du gaz, chaque fil ayant en section, une largeur de fil maximale Lf mesurée dans la direction dans laquelle s'étendent les supports,
- la grille externe étant agencée de sorte que les supports s'étendent selon l'axe longitudinal vertical,
- la grille externe étant agencée de sorte que les supports soient disposés du côté de la chambre externe et les fils du côté de la masse adsorbante.

Un tel agencement permet de faciliter l'écoulement du gaz dans la chambre externe, la grille externe créant ainsi des canaux s'étendant dans le sens de l'axe longitudinal vertical. Les fils permettent de faire obstacle à l'écoulement des particules. Les supports permettent la tenue mécanique de la grille externe.

Selon une réalisation, l'espace qui existe entre chaque fil est inférieur à l'espace qui existe entre chaque support.

Selon une réalisation, la grille externe est agencée de sorte qu'il existe la relation 0,05 < Lo / (Lo + Lf) < 0,3.

Un tel ratio permet d'augmenter les pertes de charge locales de la grille externe, ce qui permet une distribution homogène du gaz dès que ce dernier quitte la chambre externe pour entrer dans la masse adsorbante.

Selon une réalisation, les fils sont rectangulaires en section.

Selon une réalisation, la grille externe est cylindrique, la grille externe et la virole étant concentriques.

Selon une réalisation, la grille interne est cylindrique, la grille interne et la virole étant concentriques.

Selon une réalisation, la chambre externe est annulaire. Elle permet ainsi au gaz de s'écouler tout autour de la grille externe sans rencontrer d'obstacle.

Selon une réalisation, la chambre externe définit un volume annulaire de distribution du gaz. Selon une réalisation, la chambre externe est agencée de sorte que le gaz puisse circuler sur tout le pourtour de la virole sans rencontrer d'obstacle. Un tel agencement de la chambre externe et de la grille externe permet de faciliter la répartition du gaz à l'extérieur de la grille externe.

Selon une réalisation, la grille externe est agencée de sorte que les supports soient disposés du côté de la chambre externe, sur la totalité de leur longueur.

Selon une réalisation, la grille externe est agencée de sorte que les supports soient disposés du côté de la chambre externe à chaque intersection avec les fils.

Selon une réalisation, la grille externe est agencée de sorte que les fils soient disposés du côté de la masse adsorbante, sur la totalité de leur longueur.

Selon une réalisation, la grille externe est agencée de sorte que les fils soient disposés du côté de la masse adsorbante à chaque intersection avec les supports.

Selon une réalisation, la grille externe est agencée de sorte qu'à chaque intersection entre fil et support, un unique côté du support est en contact avec le fil, l'intersection comportant notamment un moyen pour solidariser le support et le fil.

L'utilisation de tels fils, permet d'obtenir une perte de charge conséquente et très homogène au niveau de toute la grille, le gaz devant s'écouler à travers une pluralité de petits canaux identiques qui jouent alors le rôle de répartiteur. La largeur de ces canaux est suffisamment faible afin d'éviter que les particules de petite taille ne puissent entrer et passer au travers.

Selon une réalisation, les fils sont évasés en section et sont montés solidaires par rapport aux supports par leur extrémité étroite, l'extrémité large étant montée libre.

Une telle géométrie de fils permet d'adapter si nécessaire la perte de charge en modifiant la section moyenne de passage du gaz à la traversée de la grille. Dans un tel agencement, la largeur minimale de l'ouverture est du côté de l'adsorbant. Ainsi, lorsque sa largeur est inférieure au diamètre de la plus petite des particules, les particules ne peuvent pas pénétrer dans le volume libre qui existe entre les fils. On notera que dans toute configuration où cette section minimale ne correspondrait pas au diamètre interne de la grille externe, des particules pourraient pénétrer dans le volume libre qui existe entre les fils jusqu'à cette section minimale et obstruer localement et de façon aléatoire le passage du gaz, allant à l'encontre de l'effet de répartition homogène recherchée.

Selon une réalisation, les fils sont triangulaires ou trapézoïdaux en section.

Selon une réalisation, la grille externe comporte une combinaison de fils de sections différentes.

Une telle réalisation peut permettre d'adapter la perte de charge imposée au gaz localement, par zones par exemple, afin de compenser les variations de vitesse de ce dernier lorsqu'il s'écoule dans la chambre de distribution externe. Ce principe peut permettre d'améliorer encore la distribution.

En variante, chaque fil est évasé en section ou chaque fil est rectangulaire en section.

Selon une réalisation, les fils et les supports sont métalliques et sont montés solidaires entre eux par soudure, notamment à chaque intersection entre fil et support.

Selon une réalisation, les supports sont montés perpendiculairement aux fils, les fils étant montés parallèles entre eux et les supports étant montés parallèles entre eux.

Selon une réalisation la grille interne est formée par une pluralité de deuxièmes fils et une pluralité de deuxièmes supports, les deuxièmes supports étant montés transversalement aux deuxièmes fils, les deuxièmes supports et les deuxièmes fils étant montés solidaires entre eux, les deuxièmes fils formant une pluralité de deuxièmes ouvertures longitudinales pour le passage du gaz de sorte que deux fils adjacents définissent une des ouvertures longitudinales de la pluralité, chaque deuxième ouverture longitudinale ayant une largeur d'ouverture minimale Lo pour le passage du gaz, chaque deuxième fil ayant en section, une largeur de fil maximale Lf mesurée dans la direction dans laquelle s'étendent ledits supports.

Selon une réalisation la grille interne est agencée de sorte que les deuxièmes supports s'étendent selon l'axe longitudinal vertical.

Selon une réalisation, la grille interne est agencée de sorte que les deuxièmes supports soient disposés du côté de la chambre interne et les fils du côté de la masse adsorbante. Selon une réalisation, la grille interne est agencée de sorte qu'il existe la relation 0,05 < Lo / (Lo + Lf) < 0,3.

L'invention concerne en outre une unité de purification ou de séparation de gaz comportant au moins un adsorbeur tel que décrit ci-dessus, l'unité mettant en œuvre un procédé PSA ou TSA.

Selon une réalisation l'unité est telle que la différence de température entre un flux d'alimentation et un flux de chauffage pour la régénération, est inférieur à 100 °C, de préférence inférieur à 75 °C, l'adsorbeur étant en fonctionnement normal.

Une telle unité, soumise à des contraintes thermiques (dilatation, contraction) limitées, permet une plus grande souplesse dans la conception des grilles, notamment de la grille externe.

Selon une réalisation, la grille externe a un diamètre externe supérieure à 2 m et une hauteur supérieure ou égale à 3 m.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une représentation schématique d'un adsorbeur radial selon l'invention ;
[Fig. 2] La figure 2 est une représentation schématique d'une portion d'une grille de l'adsorbeur de la figure 1 ;
[Fig. 3] La figure 3 est une représentation de l'évolution de la performance globale d'une unité mettant en œuvre l'adsorbeur de la figure 1, en fonction d'un paramètre de la grille externe de la figure 2.

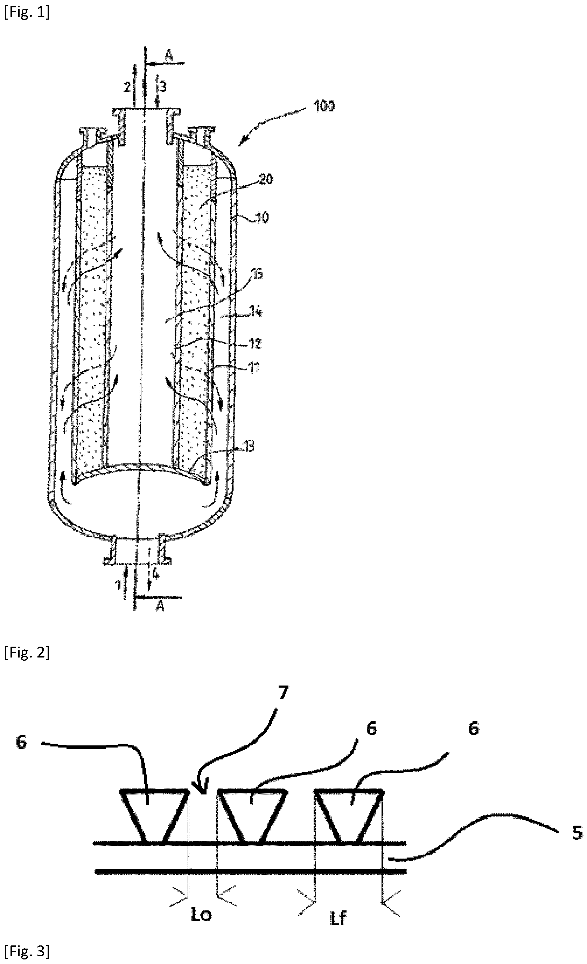

En référence à la figure 1, on a représenté un exemple d'adsorbeur radial 100 selon l'invention. L'adsorbeur radial 100 est destiné à une unité de production d'oxygène à partir d'air atmosphérique. Le cycle retenu est un cycle VPSA à 2 adsorbeurs 100, de pression haute (en fin d'adsorption) de 1,5 bar abs et de pression basse minimale de 0,47 bar obtenue par pompage sous vide. Le temps de cycle est inférieur à 40 s. La température d'entrée de l'air est généralement comprise entre 30 et 60 °C suivant la température extérieure. Cette unité est susceptible de produire 100 tonnes environ d'oxygène à une pureté de 93% mole. Le type de cycle et son mode de régulation permet de favoriser l'énergie spécifique au détriment de la production O2 ou l'inverse en jouant sur les différents points de consigne (pressions, durée d'étapes...). Suivant la demande, la teneur de la production peut aussi varier, habituellement de 89 à 94 % mole d'oxygène.

L'adsorbeur radial 100 est ici constitué d'une virole cylindrique 10 d'axe vertical longitudinal A-A (lorsque l'adsorbeur est en fonctionnement) et de deux fonds, à savoir un fond inférieur et un fond supérieur. La virole cylindrique 10 comporte en outre des et des tubulures d'entrée/sortie pour le gaz.

La masse adsorbante 20 comporte des particules. Elle est maintenue en place au moyen d'une grille externe 11 et d'une grille interne 12 fixées d'un côté sur le fond supérieur et de l'autre côté, sur un fond interne 13 bombé.

En variante, l'adsorbeur 100 peut comporter deux lits distincts (un premier lit pour arrêter la quasi-totalité de l'eau et la grande majorité du CO2 et autres impuretés secondaires tels des hydrocarbures et au moins un autre lit pour effectuer essentiellement la séparation N2/O2). Par exemple, l'adsorbeur peut comporter un premier lit d'alumine activée suivi d'un second lit de zéolite échangée au lithium. Dans ce cas, les 2 lits annulaires sont juxtaposés et séparés par une grille intermédiaire. Comparé à l'exemple de la figure 1, l'ensemble constitué par les deux lits juxtaposés et la grille intermédiaire, prendrait alors la place de la masse adsorbante 20, mais le reste de l'adsorbeur 100 resterait similaire à celui de la figure 1.

Le gaz à épurer ou à séparer 1 (représenté selon les flèches pleines) entre en partie basse de l'adsorbeur radial 100, circule verticalement à la périphérie dans une chambre externe 14 entre la virole cylindrique et la grille externe 11, traverse radialement la masse adsorbante 20 puis circule verticalement dans une chambre interne 15 avant de quitter l'adsorbeur en partie supérieure, en tant que gaz de production 2.

Lors de la régénération, le gaz de régénération 3 (représenté selon les flèches en pointillés) rentre à contre-courant par la partie haute, désorbe les impuretés contenues dans la masse adsorbante 20 et le gaz résiduaire 4 sort en partie basse.

La virole cylindrique 10 a un diamètre externe Dv. La grille externe 11 est cylindrique et a un diamètre externe De inférieur à Dv. La grille interne 12 est cylindrique et a un diamètre externe Di inférieur à De.

Dans l'exemple de la figure 1, Dv = 2600 mm, De = 2400 mm et Di = 850 mm. La hauteur des grilles interne 12 et externe 11 ont une hauteur égale à 6500 mm.

La grille externe 11 et la grille interne 12 sont agencées pour être perméable au gaz et imperméable aux particules de la masse adsorbante 20.

L'adsorbeur 100 comporte en outre des moyens d'étanchéité en partie inférieure et en partie supérieure des grilles interne 12 et externe 11, les grilles interne 12 et externe 11 formant entre elles, un volume annulaire logeant la masse adsorbante 20.

Dans l'exemple de la figure 1, l'étanchéité en partie supérieure des grilles 11, 12 est réalisée par une paroi flexible essentiellement horizontale et maintenue plaquée sur la masse adsorbante 20 par un effet de pression. En pratique, il s'agit ici d'une membrane polymérique essentiellement circulaire fixée sur la partie supérieure de la grille externe 11. En référence à la figure 2, on a représenté une portion de la grille externe 11 selon l'invention.

Dans l'exemple de la figure 2, la grille externe 11 est formée par une pluralité de fils 6 et une pluralité de supports 5, les supports 5 étant montés transversalement aux fils 6, les supports 5 et les fils 6 étant montés solidaires entre eux, les fils 6 formant une pluralité d'ouvertures longitudinales 7 pour le passage du gaz de sorte que deux fils 6 adjacents définissent une des ouvertures longitudinales 7 de la pluralité, chaque ouverture longitudinale 7 ayant une largeur d'ouverture minimale Lo, chaque fil 6 ayant en section, une largeur de fil maximale Lf mesurée dans la direction dans laquelle s'étend les supports 5. Cette largeur de fil Lf correspond au côté opposé au bord qui est soudé au support 5.

Dans l'exemple de la figure 2, chaque fil 6 est évasé en section et est monté solidaire par rapport aux supports 5 par son extrémité étroite, l'extrémité large étant montée libre.

Avec ces types de fils, l'homme du métier était pourtant incité à fixer les fils 6 sur les supports 5 de sorte que l'extrémité étroite soit montée libre et l'extrémité large en contact avec les supports 5.

Avec cette géométrie, le gaz est dirigé immédiatement à travers tout le volume de la masse adsorbante 20, les fils 6 jouant alors le rôle de diffuseur. De plus, une partie des particules se logeant dans l'espace entre les fils 6, cela réduit d'autant le volume mort externe. Cependant il est apparu que cette disposition apparemment favorable conduisait à des restrictions de passage aléatoires suivant les caractéristiques physiques des adsorbants (en particulier la distribution granulométrique) ou la méthode de remplissage. Les particules d'adsorbant se retrouvent bloquées dans le volume libre compris entre deux fils 6, à une profondeur dépendant de leur diamètre et ceci a pour conséquence des obstructions locales plus ou moins importantes. Les adsorbants ayant des caractéristiques légèrement différentes d'un lot à l'autre du fait de la fabrication, une obstruction peut se créer par exemple au moment du remplissage de l'adsorbeur lors du versement d'un sac ou d'un fût contenant un pourcentage plus élevé que la moyenne de particules de petite dimension. L'étendue d'un tel défaut peut alors correspondre à plusieurs pourcents de la surface de la grille externe 11 et avoir en fonctionnement un impact défavorable, voire inacceptable suivant les applications.

En variante, chaque fil 6 peut être rectangulaire en section. En variante encore, la grille peut comporter un mélange de ces deux types de fils 6 ou plus généralement des fils 6 présentant des caractéristiques géométriques différentes.

L'espace libre qui existe entre chaque fil 6 est aussi appelé « fente » ou « ouverture longitudinale ». Chaque ouverture longitudinale a une largeur Lo. Cette ouverture détermine la section minimale de passage du gaz entre les fils 6.

Dans l'exemple considéré, les fils 6 sont soudés aux supports 5 par soudure électrique.

Les supports 5 peuvent avoir une section avec des formes variées (à savoir une forme circulaire, elliptique, carrée, rectangulaire, évasée).

Dans l'exemple représenté, les supports 5 sont montés perpendiculaires par rapport aux fils 6. Dans la portion de la grille externe 11 de la figure 2, on a représenté uniquement trois fils 6 et un support 5.

La grille externe 11 est agencée de sorte que les supports 5 soient disposés à l'extérieur du volume annulaire et du côté de la chambre externe 14.

La grille externe 11 est agencée de sorte que les supports 5 soient verticaux lorsque l'adsorbeur est en fonctionnement (ils s'étendent donc selon l'axe longitudinal).

Une telle disposition relative des supports 5 permet d'assurer une bonne distribution du gaz tout en minimisant le volume mort. En effet, le gaz est introduit dans l'adsorbeur 100, via une extrémité du volume libre périphérique entre la paroi de la virole 10 et la grille externe 11. Ce gaz doit être introduit de façon la plus uniforme possible tout au long de la périphérie. Il convient alors de faciliter la circulation verticale de ce dernier. La succession d'obstacles que provoquerait une pluralité de supports 5 disposés horizontalement en créant une série de pertes de charge singulières (élargissements, rétrécissements de la section de passage) et de tourbillons, irait à l'opposé de l'effet recherché d'assurer une bonne distribution avec un minimum de volume mort.

La grille externe 11 est agencée de sorte qu'il existe la relation 0,05 < Lo / (Lo + Lf) < 0,3. Un tel ratio permet d'augmenter les pertes de charge de la grille externe 11, ce qui permet une distribution homogène du gaz dès que ce dernier quitte la chambre externe 14 pour entrer dans la masse adsorbante 20.

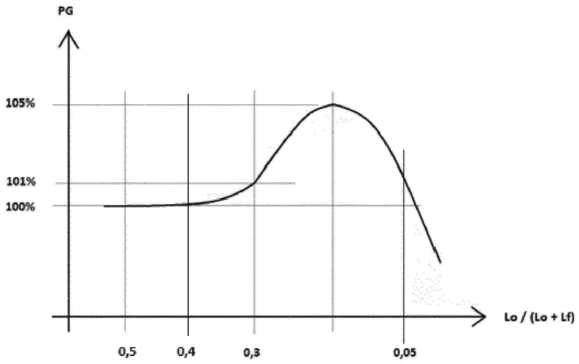

On a représenté à la figure 3, l'évolution de la performance globale PG d'une unité mettant en œuvre l'adsorbeur de la figure 1, en fonction du paramètre Lo / (Lo + Lf) de la grille externe 11.

La performance globale PG de l'unité englobe tout ce qui constitue le coût final du produit de la séparation (matière première, énergie, investissement...).

Comme on peut le voir sur la figure 3, lorsque le ratio est supérieur à 0,3, la performance globale de l'unité PG et de 100%. Lorsque ce ratio diminue en approchant la valeur de 0,3, on commence à constater que la performance globale dépasse légèrement la valeur de 100% pour atteindre 101% lorsque le ratio est égal à 0,3.

Plus le ratio diminue (en dessous de 0,3), plus la performance globale augmente pour atteindre 105%. Après avoir atteint 105%, si le ratio continue de diminuer, alors la performance globale se met à diminuer fortement jusqu'à être de nouveau égale à 101% pour un ratio de 0,05. En dessous de cette valeur, la performance globale redevient égale à 100% pour descendre en dessous de cette valeur.

Ainsi, on constate que dans la plage de valeurs 0,05 - 0,3, la performance globale est significativement améliorée par rapport à la valeur de référence de 100%.

Comme visible sur la figure 3, pour des ratios de 0,5 à 0,4 la perte de charge créée par la grille est encore négligeable, de l'ordre de celle d'une grille classique et ne permet pas une réduction du volume mort externe. On obtient donc la même performance globale (100%) que dans le cas d'une grille classique.

En diminuant ce ratio, autour de 0,3, on améliore les performances (101%) grâce à l'effet favorable sur le volume mort tout en ne se pénalisant pas encore sur la consommation énergétique. On obtient un optimum, de l'ordre de 105%, quand ces deux effets se compensent, c'est-à-dire au moment où le gain incrémental dû à la diminution du volume mort est totalement compensé par la perte incrémentale sur l'énergie, mais on reste globalement gagnant tant que le ratio reste supérieur à environ 0,05. Au-delà, l'augmentation de la perte de charge à un effet négatif qui peut devenir très défavorable.

Si l'application du principe de l'invention est de façon générale applicable à tout adsorbeur radial, on a pu noter que son intérêt principal était de réduire la section de passage dévolue au gaz et par là le diamètre de la virole de l'adsorbeur et les volumes morts. De ce point de vue le gain qu'on peut en attendre va dépendre des unités. Un premier groupe qui va en bénéficier pleinement est celui des procédés PSA en général (PSA, VPSA, VSA et encore plus particulièrement les RPSA et URPSA) pour lesquels il est bien connu de l'Homme du métier que les volumes morts ont un effet très négatif sur les performances.

Un deuxième groupe bénéficiant favorablement de cette technologie est celui des unités mettant en œuvre des adsorbeurs radiaux de grande dimension. Pour une grille 11, 12 de diamètre égal ou supérieur à 2 m et de hauteur égale ou supérieure à 3 m, le gain peut devenir appréciable. Ce gain va provenir de la réduction du diamètre de la virole 10 et des fonds inférieur et supérieur. Cela peut concerner indifféremment des unités PSA, TSA ou des lits de garde.

On notera que l'invention se rapporte à un adsorbeur radial mais que l'on pourrait faire le même type d'analyse pour des adsorbeurs de forme parallélépipédique dont l'utilisation pourrait se développer pour des procédés à pression proche de la pression atmosphérique comme l'épuration d'air ou le déballastage en CO2.

## Revendications

1. Adsorbeur radial (100), à circulation radiale d'un gaz, l'adsorbeur (100) comprenant :
- une masse adsorbante (20) comportant des particules,
- une virole (10) cylindrique s'étendant selon un axe A-A longitudinal vertical lorsque l'adsorbeur (100) est en fonctionnement, la virole (10) comportant un fond inférieur, un fond supérieur et des tubulures d'entrée/sortie pour le gaz,
- une grille externe (11) agencée de sorte à être perméable au gaz et imperméable aux particules, la grille externe (11) s'étendant selon l'axe longitudinal vertical,
- une grille interne (12) agencée de sorte à être perméable au gaz et imperméable aux particules, la grille interne (12) s'étendant selon l'axe longitudinal vertical,
- des moyens d'étanchéité en partie inférieure et en partie supérieure des grilles interne (12) et externe (11), les grilles interne (12) et externe (11) formant entre elles un volume annulaire logeant la masse adsorbante (20),
- une chambre interne (15) disposée entre l'axe longitudinal vertical et la grille interne (12),
- une chambre externe (14) disposée entre la grille externe (11) et la virole (10), les chambres interne (15) et externe (14) étant destinées à la circulation du gaz,
- la grille externe (11) étant formée par une pluralité de fils (6) et une pluralité de supports (5), les supports (5) étant montés transversalement aux fils (6), les supports (5) et les fils (6) étant montés solidaires entre eux, les fils (6) formant une pluralité d'ouvertures longitudinales (7) pour le passage du gaz de sorte que deux fils (6) adjacents définissent une des ouvertures longitudinales (7) de la pluralité, chaque ouverture longitudinale (7) ayant une largeur d'ouverture minimale Lo pour le passage du gaz, chaque fil (6) ayant en section, une largeur de fil maximale Lf mesurée dans la direction dans laquelle s'étendent les supports (5),
- la grille externe (11) étant agencée de sorte que les supports s'étendent selon l'axe longitudinal vertical,
- la grille externe (11) étant agencée de sorte que les supports (5) soient disposés du côté de la chambre externe (14) et les fils (6) du côté de la masse adsorbante (20).

2. Adsorbeur (100) selon la revendication précédente, la grille externe (11) étant cylindrique, la grille externe (11) et la virole (10) étant concentriques.

3. Adsorbeur (100) selon l'une des revendications précédentes, la chambre externe (11) définissant un volume annulaire de distribution du gaz.

4. Adsorbeur (100) selon l'une des revendications précédentes, la chambre externe (11) étant agencée de sorte que le gaz puisse circuler sur tout le pourtour de la virole (10) sans rencontrer d'obstacle.

5. Adsorbeur (100) selon l'une des revendications précédentes, la grille externe (11) étant agencée de sorte qu'il existe la relation 0,05 < Lo / (Lo + Lf) < 0,3.

6. Adsorbeur (100) selon l'une des revendications précédentes, chaque fil (6) étant évasé en section et étant monté solidaire par rapport aux supports (5) par son extrémité étroite, l'extrémité large étant montée libre.

7. Adsorbeur (100) selon l'une des revendications précédentes, les fils (6) et les supports (5) étant métalliques et montés solidaires entre eux par soudure, notamment à chaque intersection entre fil (6) et support (5).

8. Adsorbeur (100) selon l'une des revendications précédentes, les supports (5) étant montés perpendiculairement aux fils (6), les fils (6) étant montés parallèles entre eux et les supports (5) étant montés parallèles entre eux.

9. Unité de purification ou de séparation de gaz comportant au moins un adsorbeur (100) selon l'une des revendications précédentes, l'unité mettant en œuvre un procédé PSA ou TSA.

10. Unité selon la revendication précédente, dans lequel la différence de température entre un flux d'alimentation et un flux de chauffage pour la régénération, est inférieur à 100 °C, de préférence inférieur à 75 °C, l'adsorbeur (100) étant en fonctionnement normal.

11. Unité selon l'une des revendications 9 à 10, la grille externe (11) ayant un diamètre externe supérieure à 2 m et une hauteur supérieure ou égale à 3 m.
